# EUROPEAN PATENT SPECIFICATION

(11) **EP 4 417 421 B1**
(45) Date of publication and mention of the grant of the patent: **29.04.2026**
(21) Application number: 24153102.9
(22) Date of filing: 22.01.2024
(51) Int. Cl.: B32B 37/00, B32B 37/18, B32B 37/14, B32B 38/10, B32B 38/18, B32B 41/00, B32B 43/00

(54) **SHEET SEPARATION DEVICE**
BLATTTRENNVORRICHTUNG
DISPOSITIF DE SÉPARATION DE FEUILLES

(30) Priority: 24.01.2023 JP 2023008707; 30.01.2023 JP 2023012002
(43) Date of publication of application: 21.08.2024
(73) Proprietor: Ricoh Company, Ltd., Tokyo 143-8555 (JP)
(72) Inventor: TAKAI, Naoki, Tokyo, 143-8555 (JP); MIDORIKAWA, Ruki, Tokyo, 143-8555 (JP); SHIMODATE, Kazuki, Kanagawa, 243-0460 (JP); KATO, Yuichiro, Kanagawa, 243-0460 (JP); ASANO, Sho, Kanagawa, 243-0460 (JP); SAITO, Yosuke, Tokyo, 143-8555 (JP)
(74) Representative: SSM Sandmair

(56) References cited:
- JP-A- 2011 068 115
- JP-A- 2020 121 868

## Description

### BACKGROUND

### Technical Field

Embodiments of the present disclosure relate to a sheet separation device.

### Related Art

A lamination technology is known that inserts an inner sheet (e.g., sheet of paper or photo) between a two-ply lamination sheet or lamination film (e.g., a lamination pouch or lamination folder) and applies heat and pressure to the two-ply lamination sheet to bond the two-ply lamination sheet. The two-ply sheet is made of two sheets (plies) bonded (sealed) on one side as if one sheet is folded.

In the laminating process, since a series of operations have been performed manually by a user, a great deal of time and labor are required when a large number of sheets are laminated.

For this reason, a sheet separation device has been proposed in which two sheets of a two-ply sheet are separated off by winding the two-ply sheet around a rotating member and generating a difference in the circumferential length of the winding between a sheet on the inner circumferential side and a sheet on the outer circumferential side from a geometric relationship (see Japanese Unexamined Patent Application Publication No. 2020-121868).

Further, for the purpose of automating the laminating process, a structure in which a laminating apparatus is connected in series to an apparatus that separates two sheets of film has also been proposed (see Japanese Unexamined Patent Application Publication No. 2011-68115).

However, in the configuration of Japanese Unexamined Patent Application Publication No. 2011-68115, the lateral width (footprint) may be large because the laminating apparatus is horizontally disposed downstream in the conveyance direction from the apparatus that separates sheets.

In addition, since the user removes laminated sheets one by one, the workability of the user may deteriorate when the laminating process is performed on a large number of sheets.

In the case of a laminating process of inserting a printed matter into a laminated film and applying heat and pressure to adhere the laminated film and the printed matter, the printed matter such as a bulletin board or a menu table is sandwiched between sheets of the film, thus increasing the strength of the printed matter and protecting the printed matter from contamination. However, the laminating process requires a user to manually separate off the film, sandwich the printed matter to be sandwiched at an accurate position, and then perform the laminating process by a laminating machine, which is a time-consuming work.

For this reason, Japanese Unexamined Patent Application Publication No. 2020-121868 discloses a sheet separation device that automatically separates a two-ply laminated film and inserts a printed matter. In the sheet separation device, it is necessary to separately prepare a laminator for laminating an output material (a laminated film with a printed matter inserted therein) or to include a heat pressure roller functioning as a laminator. Thus, it is necessary to include an installation space for separately installing the laminator. Even if the space for installing the laminator is obtained, it is necessary to manually pass the output material through the laminator, which is time-consuming.

In order to automatically perform laminating with a smaller installation space of the laminator, the laminator may be placed on the sheet separation device and couple to the sheet separation device. However, in such a configuration, a guide path for guiding the output material conveyed from the sheet separation device is needed. In order to convey the output of the sheet separation device to the laminator, the position of the laminator needs to be aligned with the conveyance path of the output material from the sheet separation device.

However, since various laminators are commercially available, the center of the conveyance roller of the sheet separation device in the longitudinal direction may not be aligned with the center of the outer periphery of the laminator. Alternatively, the distance from the outer periphery of the laminator to the sheet insertion port differs for each laminator in the transverse direction, or the distance from the installation surface of the laminator to the sheet insertion port differs for each laminator in the vertical direction. Accordingly, the positioning of the laminator cannot be easily performed.

### SUMMARY

The object is achieved by the subject-matter of claim 1. Advantageous further developments are subject-matter of the dependent claims.

### BRIEF DESCRIPTIONS OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a front view of a sheet separation device according to an embodiment of the present disclosure;
FIG. 2 is a top plan view of the sheet separation device of FIG. 1;
FIG. 3A is a front view of a height adjustment mechanism before adjustment of the height of a lamination fixing device;
FIG. 3B is a front view of the height adjustment mechanism of FIG. 3A after the adjustment of the height of the lamination fixing device;
FIG. 4A is a front view of a position adjustment mechanism before adjustment of the position of a sheet ejection tray;
FIG. 4B is a front view of the position adjustment mechanism of FIG. 4A after the adjustment of the position of the sheet ejection tray;
FIG. 5A is a top plan view of an overall configuration of a laminating system according to an embodiment of the present disclosure;
FIG. 5B is a front view of the overall configuration of the laminating system of FIG. 5A;
FIGS. 6A and 6B are schematic views of the laminating system illustrated in FIGS. 5A and 5B;
FIGS. 7A and 7B are schematic plan views of the laminating system illustrated in FIGS. 5A and 5B;
FIG. 8 is a schematic view of a laminating system according to an embodiment of the present disclosure;
FIG. 9 is a schematic view of a laminating system according to an embodiment of the present disclosure;
FIG. 10 is a schematic perspective view of a conveyor as viewed in a direction indicated by arrow C in FIG. 8;
FIGS. 11A and 11B are schematic views of a laminating system according to an embodiment of the present disclosure;
FIGS. 12A and 12B are schematic views of a laminating system according to an embodiment of the present disclosure;
FIGS. 13A and 13B are schematic views of a laminating system according to an embodiment of the present disclosure;
FIG. 14 is a schematic perspective view of a conveyor with an ejection-angle adjusting lever;
Figure 15 is a schematic plan view of a laminating system according to an embodiment of the present disclosure;
FIGS. 16A and 16B are schematic views of a laminating system according to an embodiment of the present disclosure;
FIGS. 17A and 17B are schematic views of a laminating system according to an embodiment of the present disclosure; and
FIGS. 18A and 18B are schematic plan views of a laminating system before and after parallelism adjustment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to limit the invention as defined by the appended claims.

Referring now to the drawings, embodiments of the present disclosure are described below. As used herein, the singular forms "a," "an," and "the" are intended to include the plural forms as well, unless the context clearly indicates otherwise.

A description is given below of an embodiment of the present disclosure.

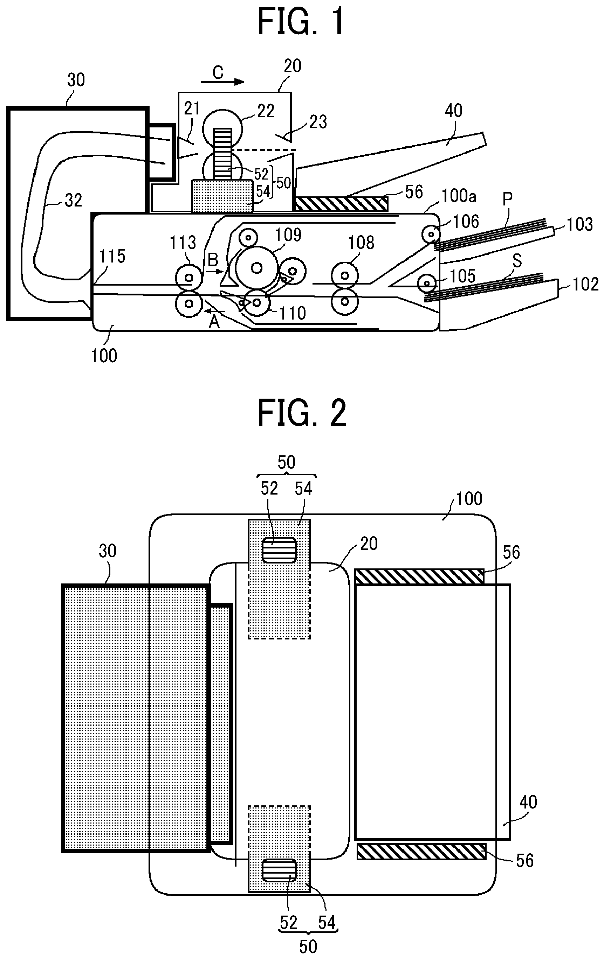

FIG. 1 is a front view of a sheet separation device 100 according to an embodiment of the present disclosure. FIG. 2 is a top plan view of the sheet separation device 100 of FIG. 1. The sheet separation device 100 according to the present embodiment separates two sheets (plies) of a two-ply sheet, which is referred to as a lamination sheet S in the following description, to insert and sandwich an inner sheet P between the separated sheets of the lamination sheet S.

The lamination sheet S is a two-ply sheet in which two sheets are overlapped and bonded together at a portion (or a side) of the two-ply sheet. For example, there is a two-ply sheet in which a first side as a transparent sheet such as a transparent polyester sheet and a second side facing the first side as a transparent or opaque sheet are bonded at one side of the two-ply sheet. Examples of the two-ply sheet also include a lamination film.

The inner sheet P is an example of the sheet medium (sheet-shaped medium) that is inserted into the two-ply sheet. Examples of the sheet medium include thick paper, postcards, envelopes, plain paper, thin paper, coated paper, art paper, tracing paper, and overhead projector (OHP) transparencies.

The sheet separation device 100 according to the present embodiment is provided with a lamination fixing device 20 and a sheet ejection tray 40 on an upper surface 100a of the sheet separation device 100. The lamination fixing device 20 laminates a lamination sheet S with an inner sheet P inserted and sandwiched between the two sheets of the lamination sheet S, which is referred to as a sheet Sp in the following description. The sheet Sp that has been laminated by the lamination fixing device 20 is stacked on the sheet ejection tray 40. The sheet separation device 100 further includes a conveyor 30 to be coupled to the lamination fixing device 20 and convey the sheet Sp from the sheet separation device 100 to the lamination fixing device 20.

The lamination fixing device 20 can be detachably mounted on the upper surface 100a of the sheet separation device 100. The lamination fixing device 20 may have a separate housing (as a laminator or a laminating device), which is provided separately from a housing of the sheet separation device 100. The sheet ejection tray 40 is disposed downstream from the lamination fixing device 20 in a sheet ejection direction in which the sheet Sp is ejected, and stacks the sheets Sp ejected from an ejection port 23 of the lamination fixing device 20.

The conveyor 30 is disposed downstream from the sheet separation device 100 in a sheet conveyance direction A, which is indicated by arrow A in FIG. 1, and has a conveyance passage 32 through which the sheet Sp is, while being reversed by 180°, conveyed to the lamination fixing device 20. A sheet conveyance direction C in the lamination fixing device 20, which is indicated by arrow C in FIG. 1, is a direction opposite to the sheet conveyance direction A in the sheet separation device 100.

A description is given below of a series of operations of feeding the lamination sheet S, separating two sheets of the lamination sheet S, inserting the inner sheet P into the lamination sheet S, and laminating the lamination sheet S enclosing the inner sheet P by application of heat and pressure, performed by the sheet separation device 100 according to the present embodiment.

The present applicant has already filed a patent application for a technique of separating a lamination sheet S (by winding a two-ply sheet (lamination sheet S) around a rotating member into two sheets and generating a difference in the circumferential length between a sheet on the inner circumferential side and a sheet on the outer circumferential side from a geometrical relationship to separate two sheets of the two-ply sheet, as Japanese Unexamined Patent Application Publication No. 2020-121868. A description is given below of a configuration and operation of the sheet separation device 100 according to an embodiment of the present disclosure.

The sheet separation device 100 includes a sheet tray 102, a pickup roller 105, and an entrance roller pair 108. The sheet tray 102 stacks lamination sheets S thereon. The pickup roller 105 feeds a lamination sheet S from the sheet tray 102. The sheet separation device 100 further includes a sheet tray 103 and a pickup roller 106. The sheet tray 103 stacks inner sheets P thereon. The pickup roller 106 feeds an inner sheet P from the sheet tray 103.

The sheet separation device 100 further includes the entrance roller pair 108, a roller pair including a winding roller 109 and a driven roller 110, and an exit roller pair 113. The entrance roller pair 108 is disposed downstream from the pickup roller 105 and the pickup roller 106 in the sheet conveyance direction. The winding roller 109 serves as a rotary member.

As illustrated in FIG. 1, the sheet separation device 100 according to the present embodiment loads the lamination sheet S and the inner sheet P on separate trays. In the present embodiment, the lamination sheet S is stacked on the sheet tray 102 such that a part of the lamination sheet S in which two sheets are bonded is positioned on the downstream side in the sheet feed direction (sheet conveyance direction) in which the lamination sheet S is fed by the pickup roller 105.

In the sheet separation device 100, the pickup roller 105 picks up a lamination sheet S, the roller pair including the winding roller 109 and the driven roller 110 conveys the lamination sheet S in the sheet conveyance direction A, which is indicated by arrow A in FIG. 1, to send the lamination sheet S to the exit roller pair 113.

Then, the exit roller pair 113 and the winding roller 109 rotate in reverse to convey the lamination sheet S in a direction indicated by arrow B in FIG. 1. The lamination sheet S conveyed in the direction indicated by arrow B in FIG. 1 is wound around the winding roller 109. As the lamination sheet S is wound around the winding roller 109 for more than one round, the leading end of the lamination sheet S in the sheet conveyance direction (i.e., the side where the two sheets of the lamination sheet S are overlapped but not bonded) is fixed to the winding roller 109.

When the lamination sheet S is further wound around the winding roller 109, a difference is created in the circumferential length between the two sheets of the lamination sheet S, to be more specific, the sheet on the inner circumference side and the sheet on the outer circumference side of the lamination sheet S. In other words, a difference in the amount of winding of the lamination sheet S around the circumference of the winding roller 109 is created between the two sheets. Due to the difference, the two sheets of the lamination sheet S start separating from each other between the exit roller pair 113 and the winding roller 109.

Then, the slack of the sheet on the inner circumference side is collected between the exit roller pair 113 and the winding roller 109, which can create a gap (space) between the sheet on the inner circumference side and the sheet on the outer circumference side.

Then, the sheet separation device 100 causes separation plates to be inserted into the gap created in the lamination sheet S from both lateral sides of the lamination sheet S. As the lamination sheet S is continuously conveyed, the lamination sheet S widely opens.

The sheet separation device 100 then rotates the entrance roller pair 108 to convey an inner sheet P conveyed from the sheet tray 102 toward the exit roller pair 113 in the sheet conveyance direction A. The inner sheet P is conveyed between the two sheets of the lamination sheet S such that the inner sheet P contacts the bonded portion of the lamination sheet S. The sheet separation device 100 then rotates the exit roller pair 113 in the clockwise direction to cause the lamination sheet S and the inner sheet P to meet to enclose the inner sheet P in the lamination sheet S that is open.

The lamination sheet S enclosing the inner sheet P (i.e., the sheet Sp) is conveyed through an exit port 115 of the sheet separation device 100 to the lamination fixing device 20 via the conveyance passage 32 in the conveyor 30.

For a detailed description of a series of operations of the sheet separation device 100 (operations from the separation of the lamination sheet S to the insertion of the inner sheet P), see Japanese Unexamined Patent Application Publication No. 2020-121868 (e.g., paragraphs [0035] to [0056]).

The lamination fixing device 20 includes an inlet 21 and a thermal pressure roller pair 22. The inlet 21 is an inlet port of a sheet to be laminated, in other words, a sheet to be thermally fixed. The thermal pressure roller pair 22 includes a heater. The thermal pressure roller pair 22 heats and presses (laminates) the sheet Sp.

In the case where the two-ply sheet is a lamination film, when the adhesive (made of, e.g., ethylene vinyl acetate (EVA)) applied to the inner side of the lamination film reaches the melting point, the adhesive melts and the two sheets of the two-ply sheet are bonded to each other. The sheet Sp laminated in this manner is ejected from the lamination fixing device 20 through an ejection roller.

The lamination fixing device 20 is a separate unit having a housing different from a housing of the sheet separation device 100. The lamination fixing device 20 may be a commercially-available lamination device (a lamination device already available on the market). Further, various lamination devices are on the market from various manufacturers and have different sizes, different lamination (fixing) processing speeds, or both. Such lamination devices typically employ a processing speed of, for example, one to three sheets per minute.

The laminated sheet Sp ejected from the lamination fixing device 20 is stacked on the sheet ejection tray 40. The sheet ejection tray 40 can continuously stack a large number of laminated sheets Sp. Thus, unlike typical laminating devices, the user does not need to remove the ejected sheets one by one, and the workability can be enhanced.

As described above, the sheet separation device 100 according to the present embodiment can automatically perform a series of operations including feeding of the lamination sheet S, separation of the lamination sheet S, insertion of the inner sheet P, bonding by heat and pressure, and stacking of the laminated sheets without manual intervention, thus enhancing the workability of the user.

In addition, the sheet separation device 100 according to the present embodiment is advantageous in that the lateral width (footprint) of the entire device is not increased since the lamination fixing device 20 can be mounted on the upper surface of the sheet separation device 100.

An advantageous structure of an embodiment of the present disclosure will be described below.

### Part 1

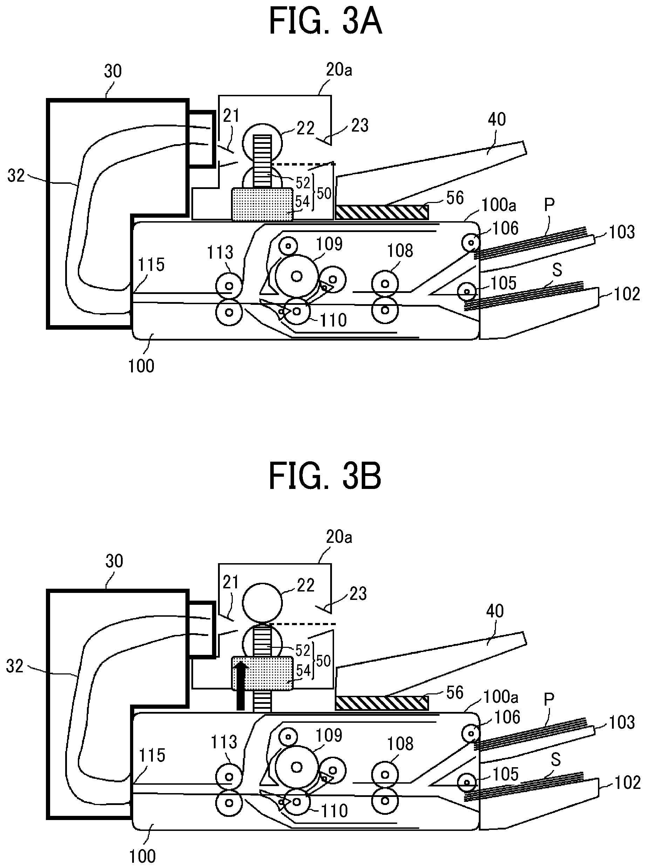

FIGS. 3A and 3B illustrate a height adjustment mechanism that adjusts the height of a lamination fixing device, according to an embodiment of the present disclosure. FIG. 3A is a front view of the height adjustment mechanism before adjustment of the height of the lamination fixing device. FIG. 3B is a front view of the height adjustment mechanism after the adjustment of the height of the lamination fixing device. In FIGS. 3A and 3B, the same reference numerals as those in FIG. 1 denote the same components, and detailed description thereof may be omitted below.

Although an already-available lamination fixing device (laminator) can be mounted on a sheet separation device 100, the height of the sheet separation device 100 may not match and a lamination sheet S from the sheet separation device 100 may not be received depending on the model of the already-available lamination fixing device.

For example, if the height of the outlet of a conveyance passage 32 of the conveyor 30 is different from the height of an inlet 21 of a lamination fixing device 20a, a sheet Sp from the conveyor 30 is not conveyed into the lamination fixing device 20a (see FIG. 3A).

In such a case, the height of the lamination fixing device 20a (the inlet 21) with respect to an upper surface 100a of the sheet separation device 100 is adjusted by a height adjustment mechanism 50 disposed on the upper surface 100a of the sheet separation device 100 (see FIG. 3B).

The height adjustment mechanism 50 is, for example, a mechanism by which a device holder 54 can be moved in the vertical direction along a height adjustment rail 52. The lamination fixing device 20a is held on the device holder 54 and the height is adjusted between the inlet 21 of the lamination fixing device 20a and the outlet of the conveyance passage 32 of the conveyor 30. Thus, the sheet Sp can be stably conveyed.

As an example of the height adjustment mechanism 50, a rack and pinion may be used. For example, the height adjustment rail 52 may be formed of a rack, and the device holder 54 may be provided with a pinion gear. The pinion gear is rotated, either manually or by a motor drive, to move the device holder 54 along the height adjustment rail 52.

### Part 2

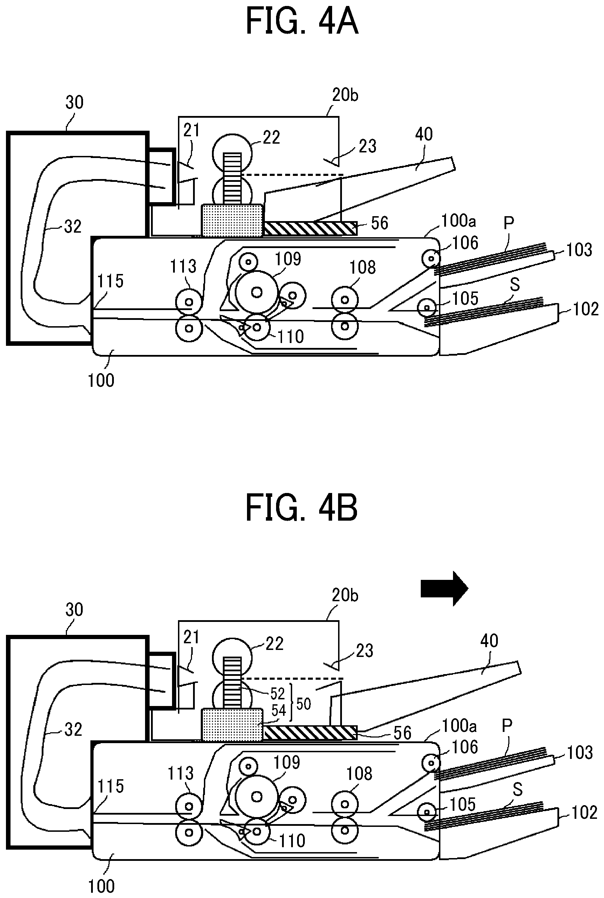

FIGS. 4A and 4B illustrate a position adjustment mechanism that adjusts the position of a sheet ejection tray, according to an embodiment of the present disclosure. FIG. 4A is a front view of the position adjustment mechanism before adjustment of the position of the sheet ejection tray. FIG. 4B is a front view of the position adjustment mechanism after the adjustment of the position of the sheet ejection tray. In FIGS. 4A and 4B, the same reference numerals as those in FIG. 1 denote the same components, and detailed description thereof may be omitted below.

As illustrated in FIG. 4A, when a lamination fixing device 20b mounted on a sheet separation device 100 is long in the horizontal direction, an inserted lamination sheet having been laminated may not be appropriately stacked on a sheet ejection tray 40. This may occur even when a lamination fixing device is short in the horizontal direction.

In such a case, as illustrated in FIG. 4B, a position adjustment mechanism 56 disposed on an upper surface 100a of the sheet separation device 100 moves the sheet ejection tray 40 in a sheet ejection direction (or a direction opposite to the sheet ejection direction), and adjusts the position of the lamination fixing device 20b with respect to the ejection port 23.

The position adjustment mechanism 56 is a mechanism that has a supporting member such as a rail, supports the sheet ejection tray 40, and can move the sheet ejection tray 40 in the horizontal direction.

Thus, the laminated sheet Sp can be stably ejected to the sheet ejection tray 40. Further, since the laminated sheets Sp can be stacked without receiving unnecessary external force, the occurrence of curling in the stacked sheets can be reduced and the quality can be stabilized.

Some embodiments of the present disclosure have been described in detail above. The above-described embodiments are examples and can be modified within the scope not departing from the gist of the present disclosure. For example, the above-described configurations (e.g., Part 1 and Part 2) may be combined with each other.

Before describing further embodiments of the present disclosure, preliminary matters for facilitating understanding of the further embodiments will be described below.

For example, a laminating apparatus in the related art has a relatively large lateral width (footprint) because a heat pressure member (e.g., a fixing device) is horizontally disposed downstream from a sheet separation device in a sheet conveyance direction (see FIG. 26 of Japanese Unexamined Patent Application Publication No. 2020-121868).

Then, to reduce the occupied area of a laminating apparatus and make effective use of an already-available laminator, the inventors have conceived of a configuration in which an already-available laminator (e.g., a lamination fixing device) is placed on a sheet separation device and a two-ply sheet is conveyed between the laminator and the sheet separation device through a sheet conveyance passage.

In this configuration, an already-available laminator is employed to automatically perform a series of laminating processes at low cost.

Such already-available laminators are manufactured and sold as lamination apparatuses by various manufacturers. Such lamination apparatuses have various sizes and lamination processing capabilities (such as the conveyance speeds). For this reason, if the conveyances speed is different between a sheet separation device and a laminator coupled to each other, wrinkles or skew (inclined conveyance) are generated in a lamination sheet. Accordingly, it is unlikely that the thermal fixing is appropriately performed.

In this case, another laminator may be employed or the sheet conveyance passage may be adjusted (redesigned) in accordance with the specification of the laminator, which impairs the convenience.

In the following embodiments, a description is given of a laminating system that can absorb the difference in the conveyance speed between a sheet separation device and a lamination fixing device to prevent the occurrence of wrinkles or skew of a two-ply sheet enclosing a sheet medium.

A first embodiment is described below.

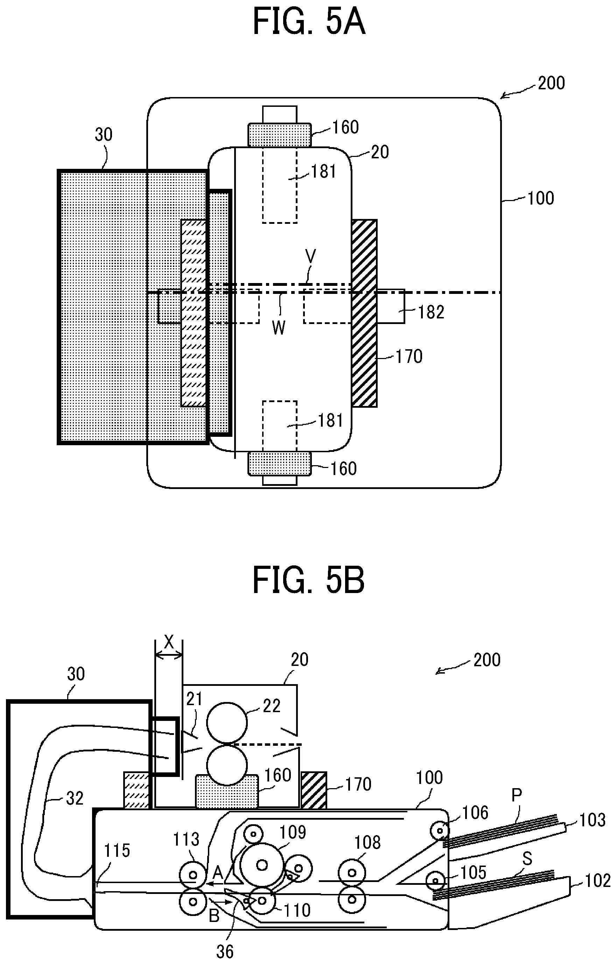

A description is given of an overall configuration of a laminating system according to an embodiment of the present disclosure, with reference to FIGS. 5A and 5B. FIG. 5A is a top plan view of a laminating system according to an embodiment of the present disclosure. FIG. 5B is a front view of the laminating system of FIG. 5A. The laminating system 200 performs a series of operations of feeding a lamination sheet S (i.e., a two-ply sheet), separating two sheets of the lamination sheet S, inserting an inner sheet P into the lamination sheet S, and laminating the lamination sheet S enclosing the inner sheet P, by application of heat and pressure, on a stand-alone basis. This series of operations is carried out automatically without any aid of a user. For this reason, the laminating system 200 can enhance and provide the convenience better than a laminating system in the related art.

The lamination sheet S is a two-ply sheet in which two sheets are overlapped and bonded together at a portion (or a side) of the two-ply sheet. For example, there is a two-ply sheet in which a first side as a transparent sheet such as a transparent polyester sheet and a second side facing the first side as a transparent or opaque sheet are bonded at one side of the two-ply sheet. Examples of the two-ply sheet also include a lamination film.

The inner sheet P is an example of the sheet medium (sheet-shaped medium) that is inserted into the two-ply sheet. Examples of the sheet medium include thick paper, postcards, envelopes, plain paper, thin paper, coated paper, art paper, tracing paper, and overhead projector (OHP) transparencies.

As illustrated in FIGS. 5A and 5B, the laminating system 200 includes a sheet separation device 100 that separates off two sheets of the lamination sheet S and sandwiches the inner sheet P between the two sheets of the lamination sheet S and has an upper surface on which a lamination fixing device 20 is to be mounted. The lamination fixing device 20 is a commercially-available device selected by the user according to the user's preference and having a housing provided separately from a housing of the sheet separation device 100, and is mounted on the upper surface of the sheet separation device 100. The lamination fixing device 20 can heat and press the lamination sheet S enclosing the inner sheet P, which may also be referred to as an inserted lamination sheet Sp. The laminating system 200 further includes a conveyor 30 that conveys the sheet Sp from the exit port 115 of the sheet separation device 100 to the inlet 21 of the lamination fixing device 20.

As described above, in the laminating system 200 according to the present embodiment, the lamination fixing device 20 is disposed above the sheet separation device 100. The conveyor 30 is disposed downstream from the sheet separation device 100 in a sheet conveyance direction A, which is indicated by arrow A in FIG. 5B, and has a conveyance passage 32 through which the sheet Sp is inverted by 180 degrees and is conveyed to the lamination fixing device 20. A sheet conveyance direction C in the lamination fixing device 20, which is indicated by arrow C in FIG. 5B, is a direction opposite to the sheet conveyance direction A in the sheet separation device 100.

A description is given of a series of operations of feeding the lamination sheet S, separating two sheets of the lamination sheet S, inserting the inner sheet P into the lamination sheet S, and laminating the lamination sheet S enclosing the inner sheet P by application of heat and pressure, performed by the laminating system 200 according to the present embodiment.

The present applicant has already filed a patent application for a technique of separating a lamination sheet S (by winding a two-ply sheet (lamination sheet S) around a rotating member into two sheets and generating a difference in the circumferential length between a sheet on the inner circumferential side and a sheet on the outer circumferential side from a geometrical relationship to separate two sheets of the two-ply sheet, as Japanese Unexamined Patent Application Publication No. 2020-121868. A description is given below of a configuration and operation of the sheet separation device 100 according to an embodiment of the present disclosure.

### Sheet Separation Device

The sheet separation device 100 includes a sheet tray 102, a pickup roller 105, and an entrance roller pair 108. The sheet tray 102 stacks lamination sheets S thereon. The pickup roller 105 feeds a lamination sheet S from the sheet tray 102. The sheet separation device 100 further includes a sheet tray 103 and a pickup roller 106. The sheet tray 103 stacks inner sheets P thereon. The pickup roller 106 feeds an inner sheet P from the sheet tray 103.

The sheet separation device 100 further includes an entrance roller pair 108, a roller pair including a winding roller 109 and a driven roller 110, and an exit roller pair 113. The entrance roller pair 108 is disposed downstream from the pickup roller 105 and the pickup roller 106 in the sheet conveyance direction. The winding roller 109 serves as a rotary member.

As illustrated in FIG. 5B, the sheet separation device 100 according to the present embodiment loads the lamination sheet S and the inner sheet P on separate trays. In the present embodiment, the lamination sheet S is stacked on the sheet tray 102 such that a part of the lamination sheet S in which two sheets are bonded is positioned on the downstream side in the sheet feed direction (sheet conveyance direction) in which the lamination sheet S is fed by the pickup roller 105.

In the sheet separation device 100, the pickup roller 105 picks up a lamination sheet S, the roller pair including the winding roller 109 and the driven roller 110 conveys the lamination sheet S in the sheet conveyance direction A, which is indicated by arrow A in FIG. 5B, to send the lamination sheet S to the exit roller pair 113.

Then, the exit roller pair 113 and the winding roller 109 rotate in reverse to convey the lamination sheet S in a direction indicated by arrow B in FIG. 5B. The lamination sheet S conveyed in the direction indicated by arrow B in FIG. 5B is wound around the winding roller 109. As the lamination sheet S is wound around the winding roller 109 for more than one round, the leading end of the lamination sheet S in the sheet conveyance direction (i.e., the side where the two sheets of the lamination sheet S are overlapped but not bonded) is fixed to the winding roller 109.

When the lamination sheet S is further wound around the winding roller 109, a difference is created in the circumferential length between the two sheets of the lamination sheet S, to be more specific, the sheet on the inner circumference side and the sheet on the outer circumference side of the lamination sheet S. In other words, a difference in the amount of winding of the lamination sheet S around the circumference of the winding roller 109 is created between the two sheets. Due to the difference, the two sheets of the lamination sheet S start separating from each other between the exit roller pair 113 and the winding roller 109.

Then, the slack of the sheet on the inner circumference side is collected between the exit roller pair 113 and the winding roller 109, which can create a gap (space) between the sheet on the inner circumference side and the sheet on the outer circumference side.

Then, the sheet separation device 100 causes separation plates to be inserted into the gap created in the lamination sheet S from both lateral sides of the lamination sheet S. As the lamination sheet S is continuously conveyed, the lamination sheet S widely opens. For a detailed description of the winding process, see Japanese Unexamined Patent Application Publication No. 2020-121868 (paragraphs [0039] to [0053]).

The sheet separation device 100 then rotates the entrance roller pair 108 to convey an inner sheet P conveyed from the sheet tray 102 toward the exit roller pair 113 in the sheet conveyance direction A. The inner sheet P is conveyed between the two sheets of the lamination sheet S such that the inner sheet P contacts the bonded portion of the lamination sheet S. The sheet separation device 100 then rotates the exit roller pair 113 in the clockwise direction to cause the lamination sheet S and the inner sheet P to meet to enclose the inner sheet P in the lamination sheet S that is open.

The lamination sheet S enclosing the inner sheet P (i.e., the sheet Sp) is conveyed through an exit port 115 of the sheet separation device 100 to the lamination fixing device 20 via the conveyance passage 32 in the conveyor 30.

The laminating system 200 illustrated in FIGS. 5A and 5B includes the sheet separation device 100 that separates a two-ply sheet to form a sheet Sp, which is a lamination sheet S having an inner sheet P inserted therein, and the lamination fixing device 20 disposed on the upper surface of the sheet separation device 100. The sheet separation device 100 has, on the upper surface thereof, a first positioner 160 that restricts the position of the lamination fixing device 20 in the direction orthogonal to the sheet conveyance direction, which may be referred to as the position of the lamination fixing device 20 in the orthogonal direction as appropriate, and a second positioner 170 that restricts the position of the lamination fixing device 20 in the sheet conveyance direction, which may be referred to as the position of the lamination fixing device 20 in the conveyance direction as appropriate. The sheet separation device 100 includes a plurality of first positioners 160, each of which is movable in the direction orthogonal to the conveyance direction of the sheet Sp. Each of the first positioners 160 may be movable in a direction obliquely intersecting the conveyance direction of the sheet Sp. The sheet separation device 100 includes a plurality of second positioners 170, each of which is movable in the conveyance direction of the sheet Sp. Each of the second positioners 170 may be movable in a direction obliquely intersecting the conveyance direction of the sheet Sp.

If the position of the lamination fixing device 20 in the conveyance direction is not fixed, the sheet Sp conveyed from the sheet separation device 100 may not be stably delivered to the lamination fixing device 20. For this reason, the first positioners 160 that restrict the position of the lamination fixing device 20 in the orthogonal direction are disposed on the upper surface of the sheet separation device 100 such that the first positioners 160 are movable in the direction orthogonal to the conveyance direction of the sheet Sp. Such a configuration allows the user to position the lamination fixing device 20 with respect to the sheet separation device 100, and the sheet Sp from the sheet separation device 100 can be stably delivered to the lamination fixing device 20 through the conveyor 30 positioned in the sheet separation device 100. Thus, the time and effort for performing a laminating process using a sheet separation device and a commercially-available lamination device can be saved, and the positioning of the lamination device on the sheet separation device can be simplified in order to reduce the installation space.

The second positioners 170 that restrict the position of the lamination fixing device 20 in the sheet conveyance direction are disposed such that the second positioners are movable in the conveyance direction of the sheet Sp. As the position of the lamination fixing device 20 is restricted in the direction different from the first positioners 160 by the second positioners 170, the lamination fixing device 20 can be stably mounted on the upper surface of the sheet separation device 100. Further, even when the distance (corresponding to the distance X illustrated in FIG. 5B) from the outer periphery of the lamination fixing device 20 to the inlet 21 serving as a film insertion port (sheet insertion port) is not constant among commercially-available lamination devices, the position of the conveyor 30 can be adjusted to be properly installed. Thus, the process from the separation of the film to the completion of the laminating can be automated.

FIG. 5A illustrates a conveyance center V of the lamination fixing device 20 and a conveyance center W of the sheet separation device 100 in a direction orthogonal to the conveyance direction of the lamination fixing device 20.

In FIG. 5B, the position of the lamination fixing device 20 in the conveyance direction of the lamination fixing device 20 is aligned with the conveyor 30 by the second positioner 170.

### Lamination Fixing Device

In the laminating system 200 illustrated in FIGS. 5A and 5B, the lamination fixing device 20 is mounted on the sheet separation device 100. The lamination fixing device 20 includes an inlet 21 and a thermal pressure roller pair 22. The inlet 21 is an inlet port of a sheet to be laminated, in other words, a sheet to be thermally fixed. The thermal pressure roller pair 22 includes a heater. The lamination fixing device 20 is a separate unit having a housing different from a housing of the sheet separation device 100. The lamination fixing device 20 may be a commercially-available lamination device (a lamination device already available on the market).

Various lamination devices are on the market from various manufacturers and have different sizes, different lamination (fixing) processing speeds, or both. Such lamination devices typically employ a processing speed of, for example, one to three sheets per minute.

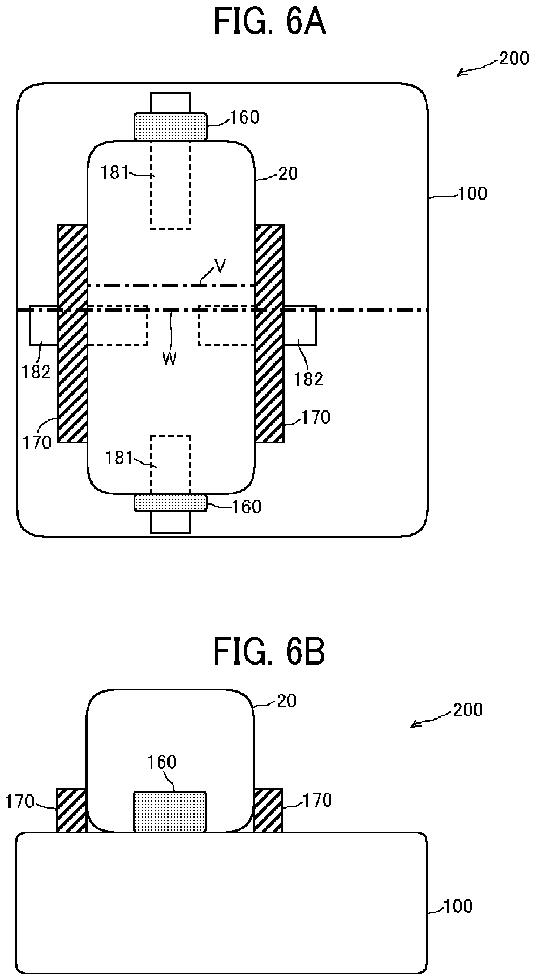

FIGS. 6A and 6B are schematic views of the laminating system 200. The conveyor 30, the internal configuration of the sheet separation device 100, and the sheet trays 102 and 103 illustrated in FIGS. 5A and 5B are omitted in FIGS. 6A and 6B. FIG. 6A is a plan view of the laminating system 200. FIG. 6B is a front view of the laminating system 200.

First rails 181 extending in a direction orthogonal to the sheet conveyance direction and second rails 182 extending in the sheet conveyance direction are disposed on the upper portion of the sheet separation device 100. The first positioners 160 and the second positioners 170 are disposed on the first rails 181 and the second rails 182, respectively. The first positioner 160 is movable along the first rail 181 and the position of the first positioner 160 can be fixed on the first rail 181. The second positioner 170 is movable along the second rail 182 and the position of the second positioner 170 can be fixed on the second rail 182.

A method of aligning the lamination fixing device 20 using the above-described members is described below.

The user places the lamination fixing device 20 on the top surface of the sheet separation device 100, moves the first positioners 160 along the first rails 181 to bring the first positioners 160 into contact with the outer periphery of the lamination fixing device 20, and fixes the first positioners 160 at th positions at which the first positioners 160 contact the outer periphery of the lamination fixing device 20. Thus, the position of the lamination fixing device 20 in the orthogonal position can be fixed. Then, the user moves the second positioners 170 along the second rails 182, brings the second positioners 172 into contact with the outer periphery of the lamination fixing device 20, and fixes the second positioners 172 at the positions at which the second positioners 172 contact the outer periphery of the lamination fixing device 20. Thus, the position of the lamination fixing device 20 in the conveyance direction can also be fixed, and the lamination fixing device 20 can be positioned with respect to the sheet separation device 100.

When a sheet is conveyed in the state where the conveyor 30 is attached with the lamination fixing device 20 positioned with respect to the sheet separation device 100, the positions at which the first positioners 160 and the second positioners 170 are fixed can be adjusted such that a conveyance failure does not occur.

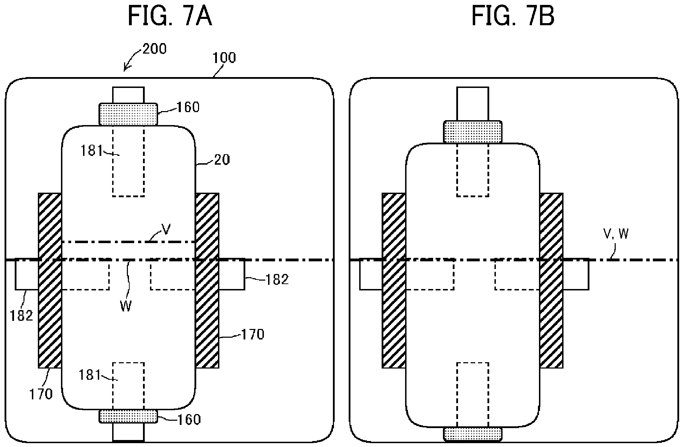

FIGS. 7A and 7B are schematic plan views of the laminating system 200. The conveyor 30, the internal configuration of the sheet separation device 100, and the sheet trays 102 and 103 illustrated in FIGS. 5A and 5B are omitted in FIGS. 6A and 6B. FIG. 7A illustrates the laminating system 200 before alignment of the conveyance center V of the lamination fixing device 20 and the conveyance center W of the sheet separation device 100 using the first positioners 160 and the second positioners 170. FIG. 7B illustrates the laminating system 200 after the alignment of the conveyance center V and the conveyance center W.

As illustrated in FIGS. 6A and 6B, since the first positioners 160 are movable along the first rails 181, the lamination fixing device 20 can be fixed to the sheet separation device 100 at any position in the orthogonal direction. As illustrated in FIG. 7A, an example of a failure that possibly occurs when the conveyance center V of the lamination fixing device 20 and the conveyance center W of the sheet separation device 100 are shifted from each other is a quality defect in which the sheet Sp fed from the sheet separation device 100 is fed to the outside of the width of the fixing roller of the lamination fixing device 20 and an end of the sheet Sp is completely laminated. However, as illustrated in FIG. 7B, according to the present embodiment, the conveyance center V of the lamination fixing device 20 and the conveyance center W of the sheet separation device 100 can be adjusted, so that the occurrence of such a quality defect can be prevented. In this way, the fixing positions of the first positioners 160 can be adjusted while checking whether a quality defect has occurred.

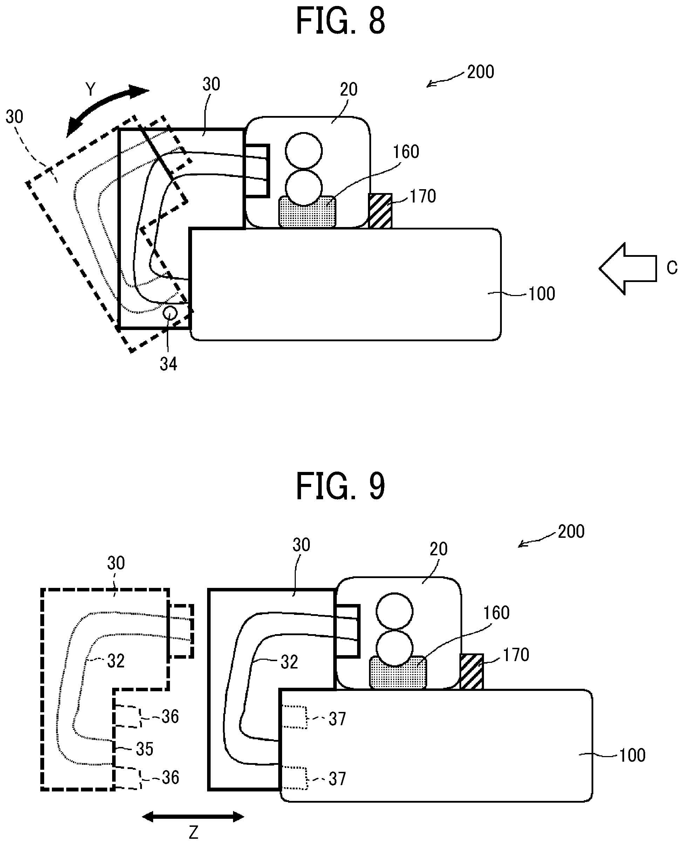

FIGS. 8, 9, and 10 are schematic views of the configuration of the conveyor 30 that is attachable to and detachable from the lamination fixing device 20 and guides a sheet Sp from the exit port 115 of the sheet separation device 100 to the inlet 21 of the lamination fixing device 20.

In the embodiment illustrated in FIG. 8, the conveyor 30 has a rotation fulcrum 34 that is rotatable relative to the lamination fixing device 20. The rotation fulcrum 34 disposed between the sheet separation device 100 and the conveyor 30 allows the conveyor 30 to rotate in the direction indicated by arrow Y in FIG. 8 around the rotation fulcrum 34. Thus, the conveyor 30 can be attached to and detached from the lamination fixing device 20. The attachable and detachable configuration allows the conveyor 30 to be used in accordance with a variety of lamination fixing devices 20. Further, for a user who needs only the sheet separation device 100, the number of components can be reduced, thus reducing the size and cost of the device.

In the embodiment illustrated in FIG. 9, the conveyor 30 has on a mounting surface 35 to attach to the sheet separation device 100 and positioning bosses 36 on the mounting surface 35. The sheet separation device 100 has insertion holes 37 corresponding to the positioning bosses 36. The positioning bosses 36 of the conveyor 30 can be inserted into and removed from the insertion holes 37 of the sheet separation device 100. Accordingly, the conveyor 30 can be attached to and detached from the sheet separation device 100 in the horizontal direction indicated by arrow Z in FIG. 9, and thus can be attached to and detached from the lamination fixing device 20.

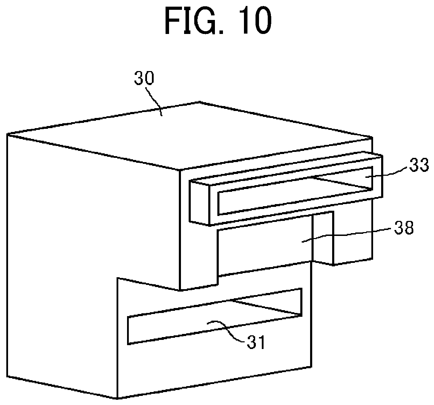

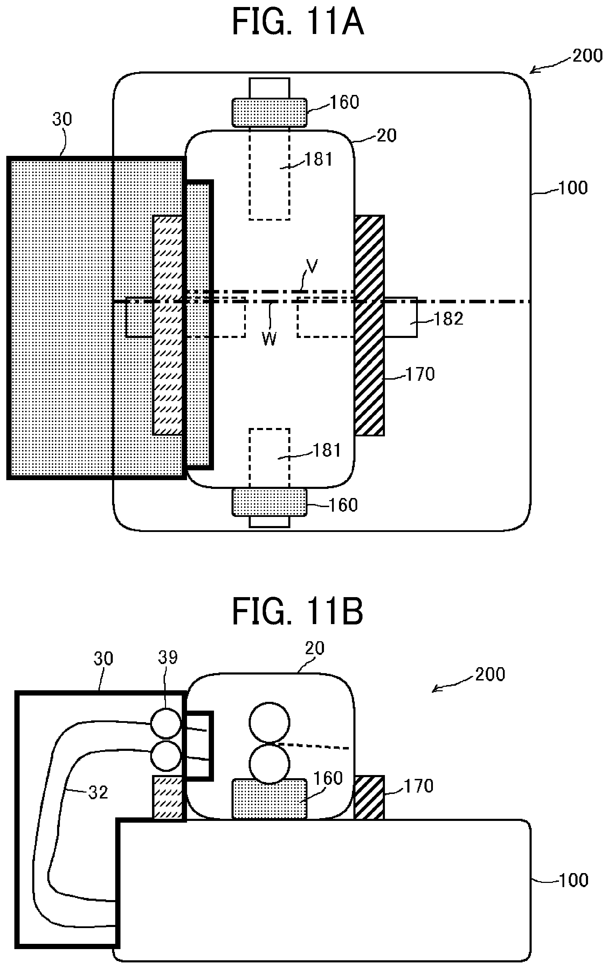

FIG. 10 is a schematic perspective view of the conveyor 30 as viewed in the direction indicated by arrow C in FIG. 8. In the embodiment illustrated in FIG. 10, the conveyor 30 has an accommodating region 38 to accommodate a second positioner 170, thus avoiding the interference between the second positioner 170 and the conveyor 30 when the conveyor 30 is mounted. This configuration is illustrated in FIGS. 11A and 11B. As illustrated in FIG. 10, the accommodating region 38 is formed as a recess. As illustrated in FIGS. 11A and 11B, the accommodating region 38 can accommodate the second positioner 170 when the conveyor 30 is mounted. An insertion port 31 for the sheet Sp is disposed in a lower portion of the conveyor 30, and an ejection port 33 for the sheet Sp is disposed in an upper portion of the conveyor 30.

Since the conveyor 30 is attachable to and detachable from the lamination fixing device 20, the lamination fixing device 20 can be easily installed to the sheet separation device 100 and can be easily replaced. The sheet Sp can be easily removed even when the sheet Sp is jammed. Further, for a user who needs only the sheet separation device 100, the number of components can be reduced, thus reducing the size and cost of the device.

In any of the embodiments illustrated in FIGS. 5A and 5B, 8, and 9, the conveyor 30 is brought into contact with the lamination fixing device 20 when the conveyor 30 is mounted. Thus, the movement of the lamination fixing device 20 is restricted. Since the conveyor 30 has the function of positioning the lamination fixing device 20, the number of components is reduced, and thus the size and cost of the device can be reduced.

FIGS. 11A and 11B are schematic views of a laminating system 200 according to an embodiment of the present disclosure. FIG. 11A is a schematic plan view of the laminating system 200 according to the present embodiment. FIG. 11B is a schematic front view of the laminating system 200 illustrated in FIG. 11A.

In the present embodiment, a pre-lamination roller 39 that corrects the inclination of a sheet Sp is disposed in a downstream portion of a conveyance passage 32 of a conveyor 30 in a conveyance direction of the sheet Sp. The conveying forces of conveyance rollers, such as an entrance roller pair 108 and an exit roller pair 113, in the sheet separation device 100 are deviated in the longitudinal direction of the conveyance rollers due to variations such as differences in the outer diameter among the conveyance rollers. Such deviation of the conveying force may cause a difference in conveying speed of a sheet Sp in the longitudinal direction, and the output material may be conveyed with an inclination with respect to the longitudinal direction of the conveyance rollers. If the inclination of the sheet Sp is large when the sheet Sp is fed from the sheet separation device 100 to the lamination fixing device 20, the sheet Sp may be clogged, resulting in a quality defect.

For this reason, the pre-lamination roller 39 that corrects the inclination of the sheet Sp is disposed in the conveyance passage 32. The pre-lamination roller 39 is rotatable by the power supplied from a driving source disposed in the device. When the sheet Sp impinges the pre-lamination roller 39, the leading end of the sheet Sp is aligned with the lamination fixing device 20 before entering the lamination fixing device 20, that is, the skew of the sheet Sp is corrected. Accordingly, the occurrence of quality defects caused by conveyance failure can be prevented.

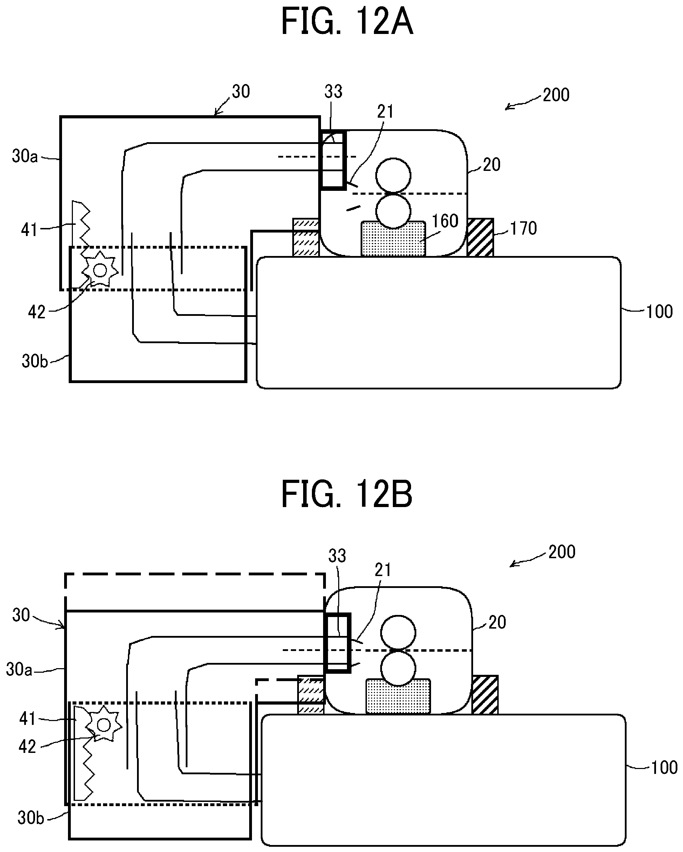

FIGS. 12A and 12B are schematic views of a laminating system 200 according to an embodiment of the present disclosure. FIG. 12A is a schematic front view of a conveyor 30 before the adjustment of the vertical position. FIG. 12B is a schematic front view of the conveyor 30 after the adjustment of the vertical position.

In the present embodiment, the conveyor 30 is divided into an upper conveyor part 30a and a lower conveyor part 30b, and is extendable in the vertical direction. The upper conveyor part 30a is provided with a vertical adjusting rack 41. The lower conveyor part 30b is provided with a pinion 42 meshed with the vertical adjusting rack 41 and a vertical adjusting knob coupled to the pinion 42. The vertical adjusting knob is located outside the conveyor 30 and can be operated by a user.

When the vertical adjusting knob is turned, the upper conveyor part 30a is moved up and down with respect to the lower conveyor part 30b by the meshing of the vertical adjusting rack 41 and the pinion 42. Accordingly, for example, when the height of an inlet 21 serving as a film insertion port (or a sheet insertion port) of the lamination fixing device 20 is different from the height of an ejection port 33 of the conveyor 30 (FIG. 12A), the vertical adjusting knob can be turned to align the ejection port 33 of the conveyor 30 with the inlet 21 of the lamination fixing device 20 and adjust the height of the inlet 21 with the height of the ejection port 33 (FIG. 12B). In other words, the vertical misalignment between the lamination fixing device 20 and the conveyance guide plate can be corrected. Such height adjustment allows a plurality of types of lamination fixing devices 20, which are different in the height of the inlet 21, to be installed to the sheet separation device 100. Thus, the user can select, as the lamination fixing device 20, any other suitable lamination fixing device than the one provided as a default, and quality defects due to delivery failure of the sheet Sp to the inlet 21 can be reduced.

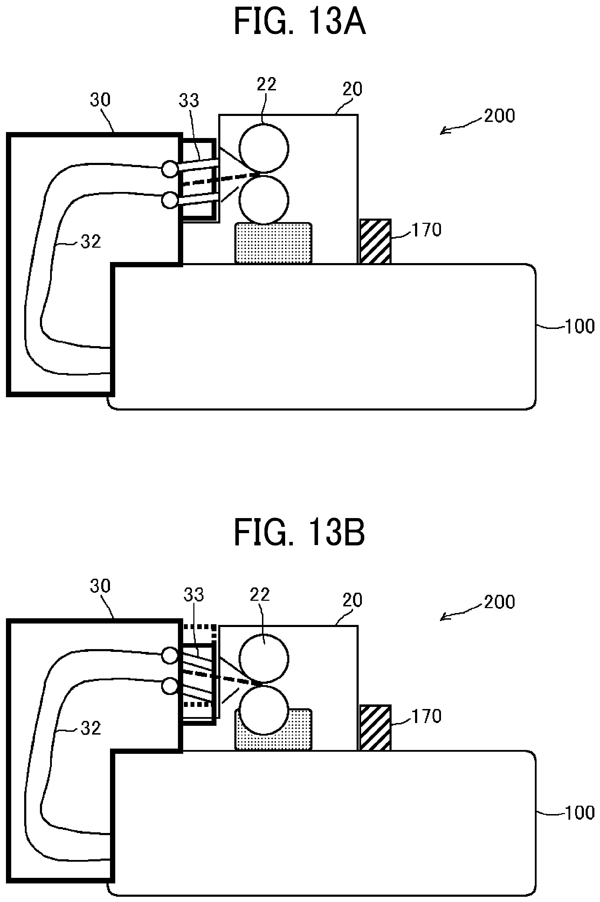

FIGS. 13A and 13B are schematic views of a laminating system 200 according to an embodiment of the present disclosure. FIG. 13A illustrates the laminating system 200 with the ejection angle of an ejection port 33 oriented upward. FIG. 13B illustrates the laminating system 200 with the ejection angle of the ejection port 33 oriented downward.

Commercially-available lamination fixing devices 20 have various distances from the installation surface thereof to a nip portion between a thermal pressure roller pair 22. For this reason, in the present embodiment, the angle of the ejection port 33 of the conveyor 30 can be adjusted to cope with various distances. Adjusting the angle of the ejection port 33 allows the sheet Sp sent from the sheet separation device 100 to be guided to the nip portion of the lamination fixing device 20 and reliably delivered to the lamination fixing device 20. Thus, multiple types of lamination fixing devices 20 can be installed, the user can select a lamination fixing device 20 from the multiple types of lamination fixing devices 20, and the sheet Sp is reliably delivered to the inlet 21 of the lamination fixing device 20, thus achieving the effect of enhancing the quality.

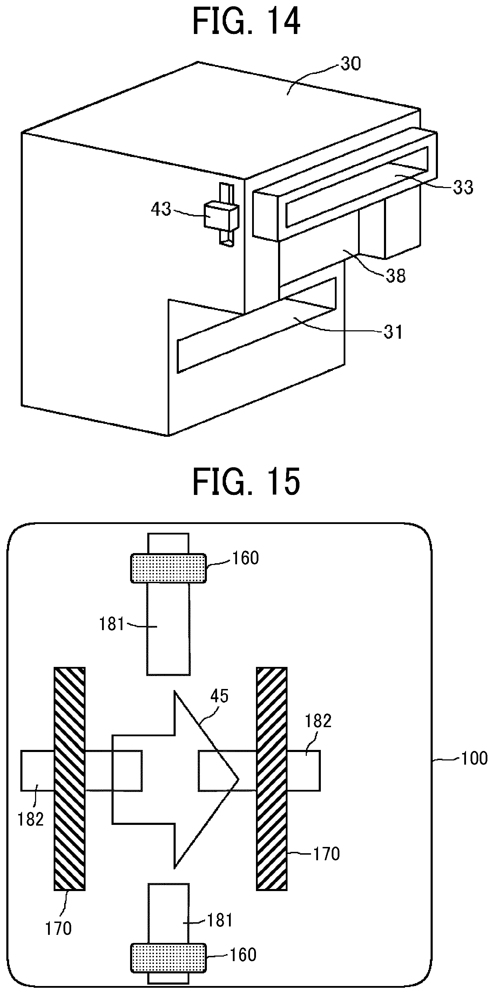

FIG. 14 is a schematic perspective view of the conveyor 30 with an ejection-angle adjusting lever 43.

The ejection-angle adjusting lever 43 is disposed on a side surface of the conveyor 30, and the user can move the ejection-angle adjusting lever 43 vertically to adjust the ejection angle of the ejection port 33 vertically.

FIG. 15 illustrates a schematic plan view of a laminating system 200 according to an embodiment of the present disclosure. A conveyor 30 is not illustrated in FIG. 15.

In the present embodiment, a mark 45 indicating the direction of installation of the lamination fixing device is disposed on an upper surface of a sheet separation device 100. If the direction of installation of the lamination fixing device 20 is wrong, a conveyance failure occurs between the conveyor 30 and the lamination fixing device 20. The mark 45 allows the user to align the conveyance direction of the lamination fixing device 20 with (the direction of) the mark 45, thus preventing the user from misinstalling the lamination fixing device 20.

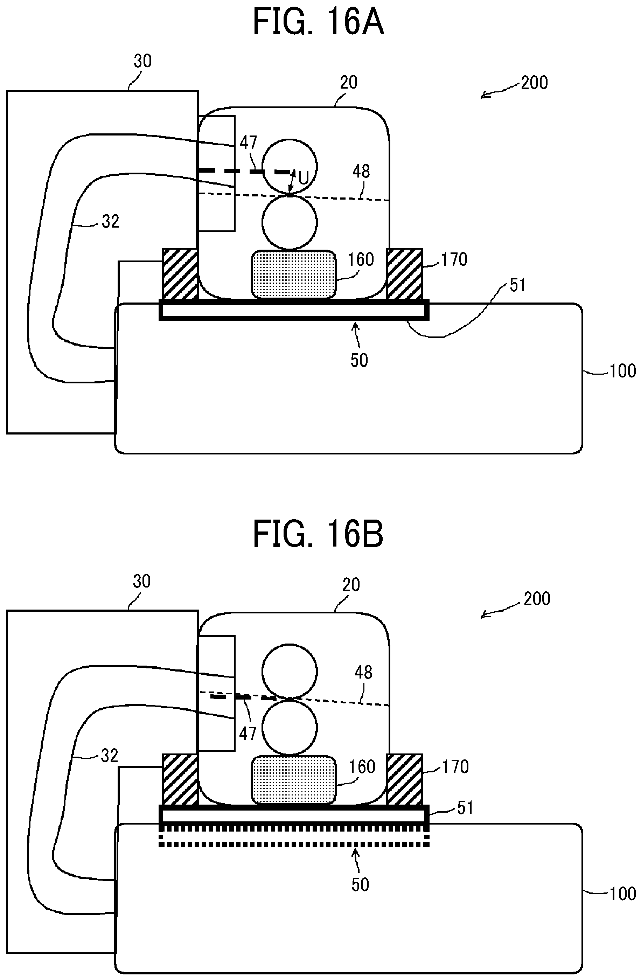

FIGS. 16A and 16B are schematic views of a laminating system 200 according to an embodiment of the present disclosure. FIG. 16A illustrates the laminating system 200 with the vertical positions of a lamination fixing device 20 and a conveyor 30 shifted from each other. FIG. 16B illustrates the laminating system 200 with the vertical positions aligned with each other. The internal configuration of the sheet separation device 100 and sheet trays are omitted in FIGS. 16A and 16B.

In the present embodiment, a height adjustment mechanism 50 serving as a vertical adjustment mechanism for the lamination fixing device 20 is disposed in the sheet separation device 100. The height adjustment mechanism 50 has a stage 51 movable in the vertical direction. First positioners 160, second positioners 170, the lamination fixing device 20, and other components are mounted on a stage 51. When a vertical gap U occurs between a conveyance-path extension line 47 of the conveyor 30 and a conveyance path 48 of the lamination fixing device 20 (FIG. 16A), the stage 51 is operated to align the conveyance path 48 of the lamination fixing device 20 with the conveyance-path extension line 47 of the conveyor 30 (FIG. 16B), thus preventing the occurrence of quality defects. The alignment of the conveyance path 48 of the lamination fixing device 20 with the conveyance-path extension line 47 of the conveyor 30 can be performed through the success or failure of the attachment of the conveyor 30 to the laminating system 200 and the occurrence of quality defects. The stage 51 allows the laminating system 200 to be adapted to various lamination fixing devices 20.

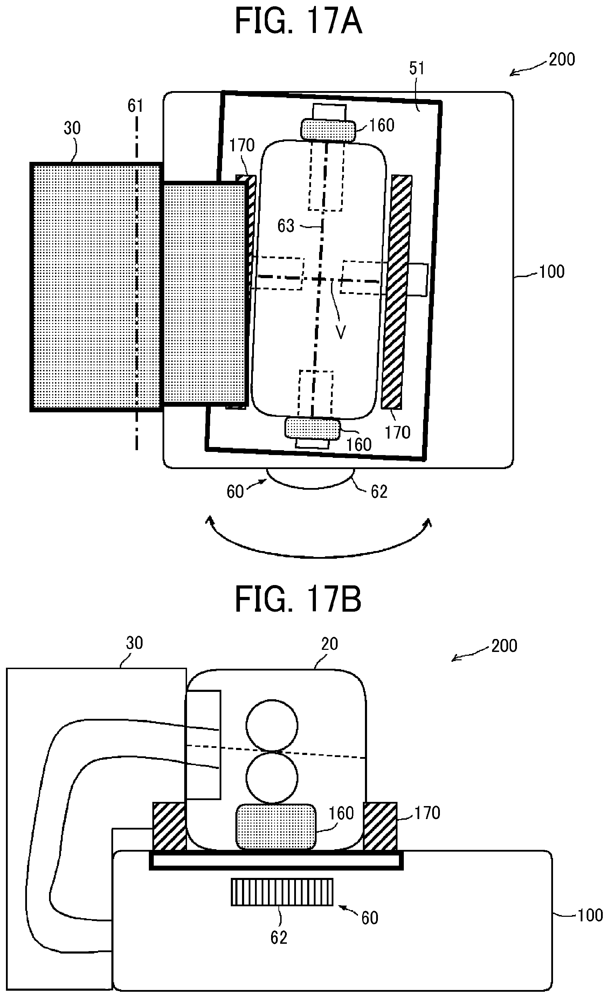

FIGS. 17A and 17B are schematic views of a laminating system 200 according to an embodiment of the present disclosure. FIG. 17A is a schematic plan view of the laminating system 200 according to the present embodiment. FIG. 17B is a schematic front view of the laminating system 200 illustrated in FIG. 17A.

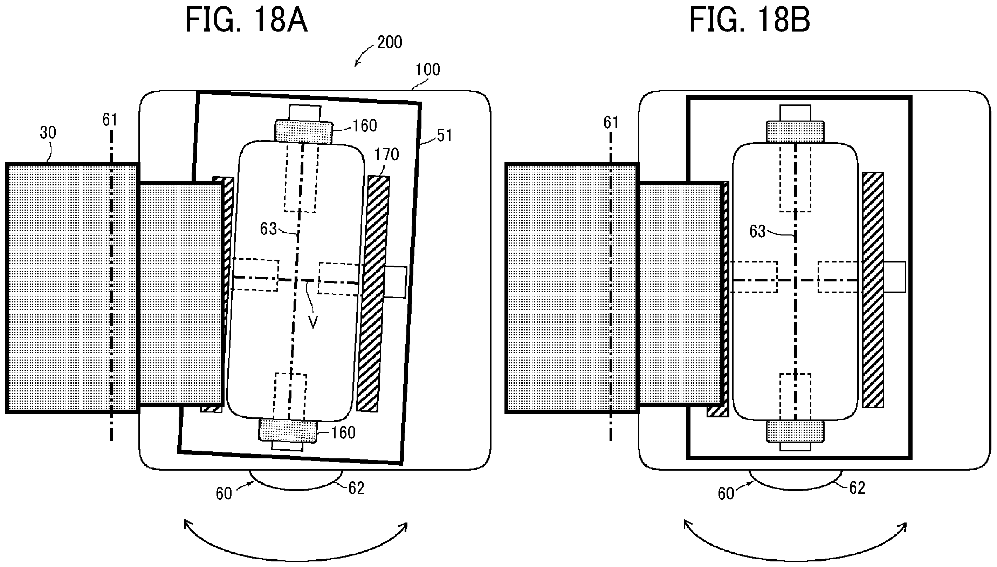

FIGS. 18A and 18B are schematic plan views of the laminating system 200 before and after parallelism adjustment. FIG. 18A illustrates the laminating system 200 before the parallelism adjustment. FIG. 18B illustrates the laminating system 200 after the parallelism adjustment.

In FIGS. 17A and 17B, the laminating system 200 has a parallelism adjustment mechanism 60 that adjusts the parallelism of the lamination fixing device 20 with respect to a conveyor 30. Accordingly, the parallelism of the lamination fixing device 20 with respect to an orthogonal line 61 to the conveyance center of the conveyor 30 can be adjusted, thus preventing the occurrence of, for example, wrinkles. With reference to FIG. 17A, the parallelism means the parallelism between the orthogonal line 61 with respect to the conveyance center of the conveyor 30 and an orthogonal line 63 with respect to a conveyance center V of the lamination fixing device 20.

The stage 51, first positioners 160, and second positioners 170 are attached to and integrated with the sheet separation device 100. The parallelism adjustment mechanism 60 has the stage 51 and a parallelism adjustment knob 62. The user can rotate the parallelism adjustment knob 62 in the direction indicated by double arrow in FIG. 17A to move the stage 51, and can align the orthogonal line 63 with respect to the conveyance center V of the lamination fixing device 20 mounted on the stage 51 with the orthogonal line 61 with respect to the conveyance center of the conveyor 30.

Since commercially-available lamination fixing devices 20 have various exterior shapes, the positioning of a lamination fixing device 20 by positioners may be insufficient depending on the exterior shape. However, the parallelism adjustment mechanism 60 can adjust the stage 51 integrated with the first positioners 160 and the second positioners 170 in the lateral direction. Thus, the orthogonal line 63 with respect to the conveyance center V of the lamination fixing device 20 can be finely adjusted, and the occurrence of quality defects caused by conveyance failure can be prevented. Such adjustment can be performed through the success or failure of the attachment of the conveyor 30 to the laminating system 200 and the presence or absence of the occurrence of quality defects.

## Claims

1. A sheet separation device (100) for separating two sheets of a two-ply sheet, in which the two sheets are overlapped and a part of the two sheets are joined, and inserting at least one sheet medium between the two sheets, the sheet separation device comprising:
a housing, an upper surface (100a) of the housing being configured to mount thereon a lamination fixing device (20) for laminating the two-ply sheet including the at least one sheet medium inserted between the two sheets; and
a conveyor (30) configured to convey the two-ply sheet including the at least one sheet medium inserted between the two sheets from the sheet separation device to the lamination fixing device (20), when the lamination fixing device (20) is mounted on the upper surface (100a).

2. The sheet separation device according to claim 1,
wherein the lamination fixing device (20) is detachably mounted on the upper surface of the sheet separation device.

3. The sheet separation device according to claim 1 or 2, further comprising an ejection tray (40) configured to stack thereon the two-ply sheet laminated by the lamination fixing device (20) and ejected from an ejection port of the lamination fixing device (20).

4. The sheet separation device according to any one of claims 1 to 3, further comprising a height adjustment mechanism (50) to adjust a height of the lamination fixing device with respect to the upper surface of the sheet separation device.

5. The sheet separation device according to any one of claims 1 to 4, further comprising a position adjustment mechanism (56) to adjust a position of the ejection tray in a sheet ejection direction with respect to the ejection port of the lamination fixing device.

6. The sheet separation device (100) according to claim 1 or 2, further comprising a plurality of first positioners (160) to restrict a position of the lamination fixing device in a direction orthogonal to a conveyance direction of the two-ply sheet, wherein
each one of the first positioners is disposed on the upper surface (100a) of the housing, and is movable in the direction orthogonal to the conveyance direction of the two-ply sheet.

7. The sheet separation device according to any one of claims 1, 2, or 6,
wherein the sheet separation device includes a plurality of second positioners (170) to restrict a position of the lamination fixing device in the conveyance direction of the two-ply sheet, and each one of the plurality of second positioners is movable.

8. The sheet separation device according to any one of claims 1, 2, 6, or 7,
wherein the conveyor is detachably attached to the lamination fixing device.

9. The sheet separation device according to any one of claims 1, 2, and 6 to 8,
wherein the conveyor contacts the lamination fixing device to restrict movement of the lamination fixing device.

10. The sheet separation device according to any one of claims 1, 2, and 6 to 9,
wherein the conveyor has a rotatable roller (39).

11. The sheet separation device according to any one of claims 1, 2, and 6 to 10,
wherein the conveyor is extendable in a vertical direction.

12. The sheet separation device according to any one of claims 1, 2, and 6 to 11,
wherein an angle of an ejection port (33) of the conveyor is adjustable.

13. The sheet separation device according to any one of claims 1, 2, and 6 to 12,
wherein the sheet separation device (100) has a mark (45) on the upper surface of the sheet separation device, and the mark indicates a direction of installation of the lamination fixing device.

14. The sheet separation device according to any one of claims 1, 2, and 6 to 13,
wherein the sheet separation device includes a vertical adjustment mechanism (50) to adjust the lamination fixing device in a vertical direction.

15. The sheet separation device according to any one of claims 1, 2, and 6 to 14, further comprising a parallelism adjustment mechanism (60) to adjust parallelism of the lamination fixing device with respect to the conveyor.

## Patentansprüche

1. Eine Blatttrennvorrichtung (100) zum Trennen zweier Blätter eines zweilagigen Blattes, bei dem die beiden Blätter überlappen und ein Teil der beiden Blätter miteinander verbunden ist, und zum Einfügen mindestens eines Blattmediums zwischen die beiden Blätter, wobei die Blatttrennvorrichtung umfasst:
ein Gehäuse, wobei eine Oberseite (100a) des Gehäuses so konfiguriert ist, dass darauf eine Laminierungsfixierungvorrichtung (20) zum Laminieren des zweilagigen Blattes einschließlich des mindestens einen zwischen den beiden Blättern eingefügten Blattmediums angebracht werden kann; und
einen Förderer (30), der so konfiguriert ist, dass er das zweilagige Blatt einschließlich des mindestens einen zwischen den beiden Blättern eingefügten Blattmediums von der Blatttrennvorrichtung zur Laminierungsfixierungvorrichtung (20) befördert, wenn die Laminierungsfixierungvorrichtung (20) auf der Oberseite (100a) montiert ist.

2. Die Blatttrennvorrichtung gemäß Anspruch 1,
wobei die Laminierungsfixierungvorrichtung (20) abnehmbar auf der Oberseite der Blatttrennvorrichtung angebracht ist.

3. Die Blatttrennvorrichtung gemäß Anspruch 1 oder 2, die ferner ein Auswurffach (40) umfasst, das so konfiguriert ist, dass es das von der Laminierungsfixierungvorrichtung (20) laminierte und aus einer Auswurföffnung der Laminierungsfixierungvorrichtung (20) ausgeworfene zweilagige Blatt darauf stapelt.

4. Die Blatttrennvorrichtung gemäß einem der Ansprüche 1 bis 3, die ferner einen Höhenverstellmechanismus (50) zum Einstellen einer Höhe der Laminierungsfixierungvorrichtung in Bezug auf die Oberseite der Blatttrennvorrichtung umfasst.

5. Die Blatttrennvorrichtung gemäß einem der Ansprüche 1 bis 4, die ferner einen Positionsverstellmechanismus (56) zum Einstellen einer Position des Auswurffachs in einer Blattauswurfrichtung in Bezug auf die Auswurföffnung der Laminierungsfixierungvorrichtung umfasst.

6. Die Blatttrennvorrichtung (100) gemäß Anspruch 1 oder 2, die ferner eine Vielzahl von ersten Positionierern (160) umfasst, um eine Position der Laminierungsfixierungvorrichtung in einer Richtung orthogonal zu einer Förderrichtung des zweilagigen Blattes zu begrenzen, wobei
jeder der ersten Positionierer auf der Oberseite (100a) des Gehäuses angeordnet und in einer Richtung orthogonal zur Förderrichtung des zweilagigen Blattes bewegbar ist.

7. Die Blatttrennvorrichtung gemäß einem der Ansprüche 1, 2 oder 6,
wobei die Blatttrennvorrichtung eine Vielzahl von zweiten Positionierern (170) umfasst, um eine Position der Laminierungsfixierungvorrichtung in der Förderrichtung des zweilagigen Blattes zu begrenzen, und jeder der Vielzahl von zweiten Positionierern beweglich ist.

8. Die Blatttrennvorrichtung gemäß einem der Ansprüche 1, 2, 6 oder 7,
wobei der Förderer abnehmbar an der Laminierungsfixierungvorrichtung angebracht ist.

9. Die Blatttrennvorrichtung gemäß einem der Ansprüche 1, 2 und 6 bis 8,
wobei der Förderer die Laminierungsfixierungvorrichtung berührt, um die Bewegung der Laminierungsfixierungvorrichtung zu begrenzen.

10. Die Blatttrennvorrichtung gemäß einem der Ansprüche 1, 2 und 6 bis 9,
wobei der Förderer eine drehbare Rolle (39) aufweist.

11. Die Blatttrennvorrichtung gemäß einem der Ansprüche 1, 2 und 6 bis 10,
wobei der Förderer in vertikaler Richtung ausfahrbar ist.

12. Die Blatttrennvorrichtung gemäß einem der Ansprüche 1, 2 und 6 bis 11,
wobei ein Winkel einer Auswurföffnung (33) des Förderers einstellbar ist.

13. Die Blatttrennvorrichtung gemäß einem der Ansprüche 1, 2 und 6 bis 12,
wobei die Blatttrennvorrichtung (100) eine Markierung (45) auf der Oberseite der Blatttrennvorrichtung aufweist und die Markierung eine Einbaurichtung der Laminierungsfixierungvorrichtung angibt.

14. Die Blatttrennvorrichtung gemäß einem der Ansprüche 1, 2 und 6 bis 13,
wobei die Blatttrennvorrichtung einen Vertikalverstellmechanismus (50) zum Verstellen der Laminierungsfixierungvorrichtung in vertikaler Richtung umfasst.

15. Die Blatttrennvorrichtung gemäß einem der Ansprüche 1, 2 und 6 bis 14, die ferner einen Parallelitätsverstellmechanismus (60) zum Einstellen der Parallelität der Laminierungsfixierungvorrichtung in Bezug auf den Förderer umfasst.

## Revendications

1. Dispositif de séparation de feuilles (100) pour séparer deux feuilles d'une feuille à double épaisseur, dans lequel les deux feuilles sont superposées et une partie des deux feuilles sont jointes et pour insérer au moins une feuille entre les deux feuilles, le dispositif de séparation de feuilles comprenant :
un boîtier, une surface supérieure (100a) du boîtier étant conçue pour y monter un dispositif de fixation par stratification (20) pour stratifier la feuille à double épaisseur comprenant l'au moins une feuille insérée entre les deux feuilles, et
un convoyeur (30) conçu pour transporter la feuille à double épaisseur comprenant l'au moins une feuille insérée entre les deux feuilles depuis le dispositif de séparation de feuilles jusqu'au dispositif de fixation par stratification (20), lorsque le dispositif de fixation par stratification (20) est monté sur la surface supérieure (100a).

2. Dispositif de séparation de feuilles selon la revendication 1,
dans lequel le dispositif de fixation par stratification (20) est monté de manière amovible sur la surface supérieure du dispositif de séparation de feuilles.

3. Dispositif de séparation de feuilles selon la revendication 1 ou 2, comprenant en outre un bac d'éjection (40) conçu pour y empiler la feuille à double épaisseur stratifiée par le dispositif de fixation par stratification (20) et éjectée d'un orifice d'éjection du dispositif de fixation par stratification (20).

4. Dispositif de séparation de feuilles selon l'une quelconque des revendications 1 à 3, comprenant en outre un mécanisme d'ajustement de hauteur (50) pour ajuster la hauteur du dispositif de fixation par stratification par rapport à la surface supérieure du dispositif de séparation de feuilles.

5. Dispositif de séparation de feuilles selon l'une quelconque des revendications 1 à 4, comprenant en outre un mécanisme d'ajustement de position (56) pour ajuster la position du bac d'éjection dans une direction d'éjection de feuilles par rapport à l'orifice d'éjection du dispositif de fixation par stratification.

6. Dispositif de séparation de feuilles (100) selon la revendication 1 ou 2, comprenant en outre une pluralité de premiers positionneurs (160) pour limiter la position du dispositif de fixation par stratification dans une direction orthogonale à la direction de transport de la feuille à deux épaisseurs,
chacun des premiers positionneurs étant disposé sur la surface supérieure (100a) du boîtier et étant mobile dans la direction orthogonale à la direction de transport de la feuille à double épaisseur.

7. Dispositif de séparation de feuilles selon l'une quelconque des revendications 1, 2 et 6,
dans lequel le dispositif de séparation de feuilles comprend une pluralité de deuxièmes positionneurs (170) pour limiter la position du dispositif de fixation par stratification dans la direction de transport de la feuille à deux épaisseurs et chacun des deuxièmes positionneurs étant mobile.

8. Dispositif de séparation de feuilles selon l'une quelconque des revendications 1, 2, 6 et 7,
dans lequel le convoyeur est fixé de manière amovible au dispositif de fixation par stratification.

9. Dispositif de séparation de feuilles selon l'une quelconque des revendications 1, 2 et 6 à 8,
dans lequel le convoyeur est en contact avec le dispositif de fixation par stratification afin de limiter le déplacement du dispositif de fixation par stratification.

10. Dispositif de séparation de feuilles selon l'une quelconque des revendications 1, 2 et 6 à 9,
dans lequel le convoyeur comporte un rouleau rotatif (39).

11. Dispositif de séparation de feuilles selon l'une quelconque des revendications 1, 2 et 6 à 10,
dans lequel le convoyeur est extensible dans une direction verticale.

12. Dispositif de séparation de feuilles selon l'une quelconque des revendications 1, 2 et 6 à 11,
dans lequel l'angle d'un orifice d'éjection (33) du convoyeur est ajustable.

13. Dispositif de séparation de feuilles selon l'une quelconque des revendications 1, 2 et 6 à 12,
dans lequel le dispositif de séparation de feuilles (100) comporte une marque (45) sur la surface supérieure du dispositif de séparation de feuilles et la marque indique une direction d'installation du dispositif de fixation par stratification.

14. Dispositif de séparation de feuilles selon l'une quelconque des revendications 1, 2 et 6 à 13,
dans lequel le dispositif de séparation de feuilles comprend un mécanisme d'ajustement vertical (50) pour ajuster le dispositif de fixation par stratification dans une direction verticale.

15. Dispositif de séparation de feuilles selon l'une quelconque des revendications 1, 2 et 6 à 14, comprenant en outre un mécanisme d'ajustement de parallélisme (60) pour ajuster le parallélisme du dispositif de fixation pour stratification par rapport au convoyeur.
